# EUROPÄISCHE PATENTSCHRIFT

(11) **EP 2 757 346 B1**
(45) Veröffentlichungstag und Bekanntmachung des Hinweises auf die Patenterteilung: **30.03.2016**
(21) Anmeldenummer: 13152086.8
(22) Anmeldetag: 21.01.2013
(51) Int. Cl.: G01B 11/06, G08G 1/04

(54) **Verfahren zum Messen eines Höhenprofils eines auf einer Straße passierenden Fahrzeugs**
Method for measuring a height profile of a vehicle passing on the street
Procédé de mesure d'un profil de hauteur d'un véhicule passant sur une route

(43) Veröffentlichungstag der Anmeldung: 23.07.2014
(73) Patentinhaber: Kapsch TrafficCom AG, 1120 Wien (AT)
(72) Erfinder: Kotz, Christian, 1030 Wien (AT); Rafelsberger, Oliver, 2344 Maria Enzersdorf (AT); Janner, Christian, 1210 Wien (AT)
(74) Vertreter: Weiser, Andreas

(56) Entgegenhaltungen:
- EP-A1- 2 306 426
- DE-A1- 4 332 158
- DE-A1- 19 517 029
- DE-A1-102009 031 319
- US-A1- 2004 008 514
- HA J ET AL: "Active contours and optical flow for automatic tracking of flying vehicles", AMERICAN CONTROL CONFERENCE, 2004. PROCEEDINGS OF THE 2004 BOSTON, MA, USA JUNE 30-JULY 2, 2004, PISCATAWAY, NJ, USA,IEEE, 30. Juni 2004 (2004-06-30), Seite 3441, XP031989337, ISBN: 978-0-7803-8335-7

## Beschreibung

Die vorliegende Erfindung betrifft ein Verfahren zum Messen eines Höhenprofils eines auf einer Straße passierenden Fahrzeugs.

Die Vermessung von Fahrzeugen im fließenden Verkehr ist beispielsweise für Höhenkontrollen von Fahrzeugen oder für Straßenmautsysteme von Bedeutung, welche je nach Fahrzeugform, z.B. Fahrzeuggröße, Karosserieaufbau (PKW oder LKW), Vorhandensein eines Anhängers, Achsanzahl usw. unterschiedliche Mautgebühren abrechnen. Dazu werden derzeit verschiedenste Technologien eingesetzt, beispielsweise Laserscanner oder stereoskopische (binokulare) Kameras, um ein 3D-Bild der passierenden Fahrzeuge zu erstellen und daraus ein Höhenprofil der Fahrzeuge zu ermitteln. Laserscanner sind jedoch ausgesprochen aufwendig in Konstruktion und Wartung, und stereoskopische Kameraaufbauten benötigen stets eine spezielle, aufwendige Kalibrierung. Die Erfindung setzt sich zum Ziel, ein einfacheres Verfahren zum Messen des Höhenprofils eines Fahrzeugs im Fließverkehr zu schaffen.

Dieses Ziel wird mit einem Verfahren der einleitend genannten Art erreicht, umfassend:
Richten einer monokularen Kamera von einem Punkt oberhalb der Straße auf die Straße mit einem Öffnungswinkel, der einen Ausschnitt der Straße von oben erfasst,
Aufnehmen zumindest eines ersten Bildes des passierenden Fahrzeugs mittels der Kamera zu einem ersten Zeitpunkt,
Aufnehmen zumindest eines zweiten Bildes des passierenden Fahrzeugs mittels der Kamera zu einem zweiten Zeitpunkt,
Erzeugen eines Bewegungsvektorbildes des Fahrzeugs aus einer Analyse des optischen Flusses zwischen dem ersten und dem zweiten Bild, und
Erstellen des Höhenprofils des Fahrzeugs aus dem Bewegungsvektorbild.

Die Erfindung schlägt erstmals den Einsatz einer optischen Flussanalyse am Ausgangsbildstrom einer monokularen Kamera für die Vermessung des Höhenprofils eines Fahrzeugs auf einer Straße vor. Die Ermittlung von 3D- bzw. genauer 2.5D-Bildern aus dem optischen Fluss ("Optical Flow") zwischen zeitlich aufeinanderfolgenden Bildern aus somit unterschiedlichen Relativpositionen ist in der Technik unter dem Schlagwort "depth from motion" bzw. "shape from video" an sich bekannt und nützt die Tatsache aus, dass sich kameranahe Punkte eines die Kamera passierenden Objekts scheinbar schneller bewegen als kameraferne Objektpunkte desselben Objekts, wodurch Tiefeninformation über das Objekt erhalten werden kann.

Die Grundlagen der optischen Flussanalyse sind beispielsweise in Antonin Chambolle et al., "An introduction to Total Variation for Image Analysis", Radon Series Comp. Appl. Math 9, 1-78, De Gruyter 2010; John Dainitith, "Optical Flow", 2004, abgerufen am 5. Juni, 2012 von encyclopedia.com; Robert Fisher et al., "Dictionary of Computer Vision and Image Processing", John Wiley and Sons, 2005, beschrieben. In der Verkehrsüberwachungstechnik wurden Optical-Flow-Verfahren bislang dazu verwendet, die Bewegung von Verkehrsströmen auf Fahrspuren zu untersuchen, siehe z.B. Young Cho et al., "Estimating Velocity Fields on a Freeway from Low Resolution Video", IEEE Transactions on Intelligent Transportation Systems, 2006, Bd 7, Ausgabe 4, Seiten 463-469; oder Jens Klappstein, "Detektion von bewegten Objekten in Straßenverkehrsszenen mittels des optischen Flusses", Dissertation Ruprecht-Karls-Universität Heidelberg, 2008. Auch wurden einzelne Fahrzeuge mit Hilfe von durch Optical-Flow-Analyse erzeugten 3D-Repräsentationen der Fahrzeuge an Kreuzungen verfolgt, siehe z.B. Alexander Barth et al., "Vehicle Tracking at Urban Intersections Using Dense Stereo", 3rd Workshop on Behaviour Monitoring and Interpretation, BMI, Ghent, 2009; David Pfeiffer und Uwe Franke, "Efficient Representation of Traffic Scenes by Means of Dynamic Stixels", IEEE Intelligent Vehicles Symposium (IV), Seiten 217-224, San Diego, USA, 2010; L. Dreschler und H. -H. Nagel, "Volumetric Model and 3D-Trajectory of a Moving Car Derived from Monocular TV-Frame Sequences of a Street Scene", IJCAI'81 Proceedings of the 7th International Joint Conference on Artificial Intelligence, Seiten 692-697. Einen Überblick über herkömmliche Verkehrstechnikanwendungen von Optical-Flow-Verfahren geben V. Kastrinaki et al., "A Survey of Video Processing Techniques for Traffic Applications", Image and Vision Computing 21, Seiten 359-381, 2003.

DE 195 17 029 A1 offenbart ein Verfahren zum Messen einer Fahrzeughöhe, wobei ein erstes und ein zweites Bild eines passierenden Fahrzeugs mittels einer monokularen Kamera zu zwei Zeitpunkten aufgenommen werden. Aus der Bildverarbeitung wird eine Fahrzeugkante erkannt, deren Bewegungsbeschreibung ermittelt wird. Daraus wird die Höhe dieser Fahrzeugkante bestimmt.

Das erfindungsgemäße Verfahren erübrigt kostspielige zusätzliche Sensoren wie etwa Laserscanner und eine aufwendige Kalibrierung stereoskopischer Kameras und ermöglicht mit nur einer einzigen, von oben auf die Straße gerichteten Kamera eine Höhenprofilvermessung der Fahrzeuge, was im Stand der Technik noch niemals angedacht wurde.

Bevorzugt wird die Kamera im wesentlichen vertikal nach unten auf die Straße gerichtet, um Abschattungen an den vorderen und hinteren Stirnflächen des Fahrzeugs aufzuteilen und dadurch zu minimieren.

Das gemessene Höhenprofil kann sowohl ein 2.5D-Höhenprofil sein - unter einem 2.5D-Höhenprofil wird ein 3D-Profil verstanden, das nur jene Bildtiefeninformationen enthält, die vom Blickwinkel und Montagepunkt der Kamera aus ersichtlich sind - als auch ein 2D-Höhenprofil ("Schnittbild"); für letzteres wird bevorzugt ein zur Straßenlängsrichtung parallelverlaufendes 2D-Höhenprofil ausgewählt: Die Analyse des optischen Flusses liefert bei der Bewegung der Fahrzeuge in deren Fahrtrichtung gerade in dieser Richtung die aussagekräftigste Tiefeninformation.

Aus denselben Gründen wird der optische Fluss bevorzugt anisotrop in Straßenlängsrichtung analysiert. Die Kanten der passierenden Fahrzeuge verändern sich quer zur Straßenlängsrichtung zwischen den beiden Bildern - soferne ein Fahrzeug nicht gerade die Spur wechselt - kaum, sodass dies als Randbedingung bei der Analyse des optischen Flusses verwendet werden kann.

Bevorzugt wird das Höhenprofil anhand der Geschwindigkeit des tiefsten aufgenommenen Punktes des Fahrzeugs oder eines Schattens des Fahrzeugs auf der Straße skaliert, um ein korrekt dimensioniertes Höhenprofil zu erzeugen.

Alternativ kann eine "Selbst-Skalierung" der Höhenprofile auf die Fahrzeuggeschwindigkeit erreicht werden, indem die Erfassungszeitpunkte der beiden Bilder, welche durch optische Flussanalyse ausgewertet werden sollen, von einer Detektion des Fahrzeugs an vorgegebenen Positionen auf der Straße abhängig gemacht werden. Bevorzugt ist dazu der erste Zeitpunkt jener Zeitpunkt, zu dem das Fahrzeug in einer ersten Position auf der Straße detektiert wird, und der zweite Zeitpunkt jener Zeitpunkt, zu dem das Fahrzeug in einer zweiten Position auf der Straße detektiert wird.

Besonders bevorzugt wird das Detektieren des Fahrzeugs in der ersten und der zweiten Position mit Hilfe von an der Straße angeordneten Sensoren oder mittels einer Auswertung der Bilder der Kamera selbst durchgeführt. Die genannten Sensoren können beispielsweise Lichtschranken, Induktionsschleifen in der Fahrbahn, Scanner od.dgl. sein. Werden die Bilder der Kamera selbst zur Positionsdetektion der Fahrzeuge herangezogen, können beispielsweise signifikante Punkte des Fahrzeugbildes, z.B. eine Ecke im Umriss des Fahrzeugs, an vorgegebenen Positionen im Bild detektiert werden.

In weiteren vorteilhaften Ausführungsformen der Erfindung wird bevorzugt das Bewegungsvektorbild, bevor daraus das Höhenprofil erstellt wird, oder das erstellte Höhenprofil um den Öffnungswinkel der Kamera kompensiert und dadurch entzerrt.

Für die optische Flussanalyse kann jedes in der Technik bekannte Optical-Flow-Verfahren verwendet werden. Aufgrund der relativ hohen Relativbewegung von schnellen Fahrzeugen im Bild wird bevorzugt ein Total-Variation-Optical-Flow-Verfahren verwendet, wie es beispielsweise in T. Brox und J. Malik, "Large Displacement Optical Flow: Descriptor Matching in Variational Motion Estimation", IEEE Transactions on Pattern Analysis and Machine Intelligence, Bd 33, Ausgabe 3, Seiten 500-513, 2011, beschrieben ist und für das Matlab-Programmbibliotheken beispielsweise unter http://lmb.informatik.uni-freiburg.de-/resources/binaries/ erhältlich sind.

Das Verfahren der Erfindung kann im weiteren dazu verwendet werden, das vermessene Fahrzeug zu klassifizieren, indem das erstellte Höhenprofil mit Referenz-Höhenprofilen bekannter Fahrzeugklassen verglichen wird.

Für das Verfahren der Erfindung kann jede geeignete Kamera herangezogen werden, z.B. eine Fotokamera zur Aufnahme aufeinanderfolgender Einzelbilder oder eine Videokamera. Bevorzugt wird als Kamera eine auf einer straßenüberspannenden Brücke montierte Verkehrsüberwachungskamera verwendet, insbesondere eine Verkehrsüberwachungs-Videokamera, deren Videostream (Bildausgangsstrom) der optischen Flussanalyse zugeführt wird.

Die Erfindung wird nachstehend anhand eines in den beigeschlossenen Zeichnungen dargestellten Ausführungsbeispiels näher erläutert. In den Zeichnungen zeigen:
die Fig. 1a und 1b das Verfahren der Erfindung bei der Bildaufnahme eines unter einer monokularen Kamera passierenden Fahrzeugs zu zwei verschiedenen Zeitpunkten;
die Fig. 2a - 2d das Verfahren der Erfindung anhand von darin auftretenden Bild-, Vektor- und Profildaten;
die Fig. 3a und 3b zwei beispielhafte Bewegungsvektorbilder vor (Fig. 3a) und nach (Fig. 3b) dem Entzerren;
Fig. 4 ein aus dem entzerrten Bewegungsvektorbild von Fig. 3b erstelltes 2.5D-Höhenprofil in einer Perspektivansicht; und
Fig. 5 ein aus dem Bewegungsvektorbild von Fig. 3a oder 3b oder dem 2.5D-Höhenprofil der Fig. 4 erstelltes 2D-Höhenprofil bzw. dessen optionale nachträgliche Entzerrung.

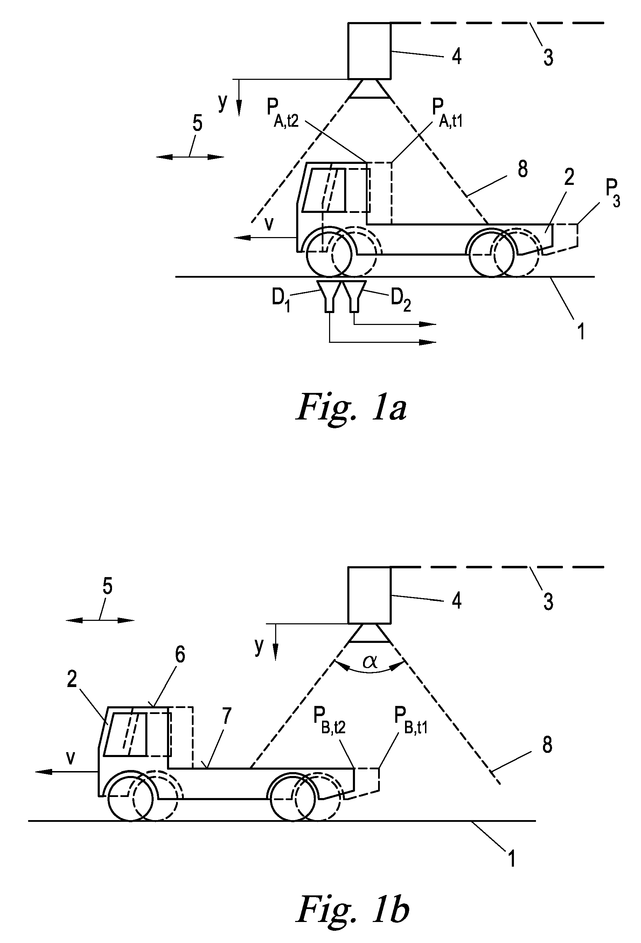

Die Fig. 1a und 1b zeigen den grundsätzlichen Messaufbau für die Ausführung des gegenständlichen Verfahrens zum Messen eines Höhenprofils eines auf einer Straße 1 passierenden Fahrzeugs 2. Das Fahrzeug 2 ist in den Fig. 1a und 1b jeweils in zwei verschiedenen Stellungen bzw. Positionen gezeigt, und zwar einer ersten, mit strichlierten Linien gezeichneten Position zum Zeitpunkt t₁ und einer zweiten, mit ausgezogenen Linien gezeigten Position zu einem späteren Zeitpunkt t₂.

Über der Straße 1 ist an einem ortsfesten Träger 3, z.B. einem Pfahl mit Kragarm oder einer die Straße überspannenden Brücke ("gantry") eine nach unten auf die Straße 1 gerichtete Kamera 4 montiert, z.B. in einer Montagehöhe von 6 - 7 m. Die Kamera 4 ist monokular, d.h. hat einen einzigen - meist quadratischen oder rechteckigen - Bildaufnahmesensor (nicht gezeigt) und ein diesem vorgeordnetes einziges Objektiv, wodurch sie ein umgekehrt-pyramidenförmiges Blickfeld 8 mit einem Öffnungswinkel α in einer Ebene parallel zur Straßenlängsrichtung 5 gesehen und einem Öffnungswinkel β (nicht gezeigt) in einer Ebene quer zur Straßenlängsrichtung gesehen 5 hat. Zur deutlicheren Veranschaulichung hat das hier beispielhaft dargestellte Fahrzeug 2 ein sehr stark differenziertes und vereinfachtes Höhenprofil mit im wesentlichen einer kameranahen (hohen) Deckfläche 6 in Form eines Fahrerkabinendachs und einer kamerafernen (tiefen) Deckfläche 7 in Form einer Ladepritsche.

Es versteht sich, dass die Kamera 4 auch schräg nach unten auf die Straße 1 gerichtet werden kann, solange in einem Teil ihres Blickfelds 8 der interessierende Straßenabschnitt, auf dem das Fahrzeug 2 passiert, erblickbar ist.

Wie aus den Fig. 1a und 1b ersichtlich, bewegt sich ein kameranaher Punkt P_{A} auf z.B. der Deckfläche 6 in einer gegebenen Zeitspanne Δt = t₂ - t₁ zwischen dem ersten Zeitpunkt t₁ und dem zweiten Zeitpunkt t₂ im Blickfeld 8 der Kamera 4 scheinbar um einen Bewegungsvektor x_{A}, wogegen sich ein kameraferner Bildpunkt P_{B} auf z.B. der Deckfläche 7 in derselben Zeitspanne Δt zwischen denselben (oder anderen) Zeitpunkten um den kleineren Bewegungsvektor x_{B} bewegt.

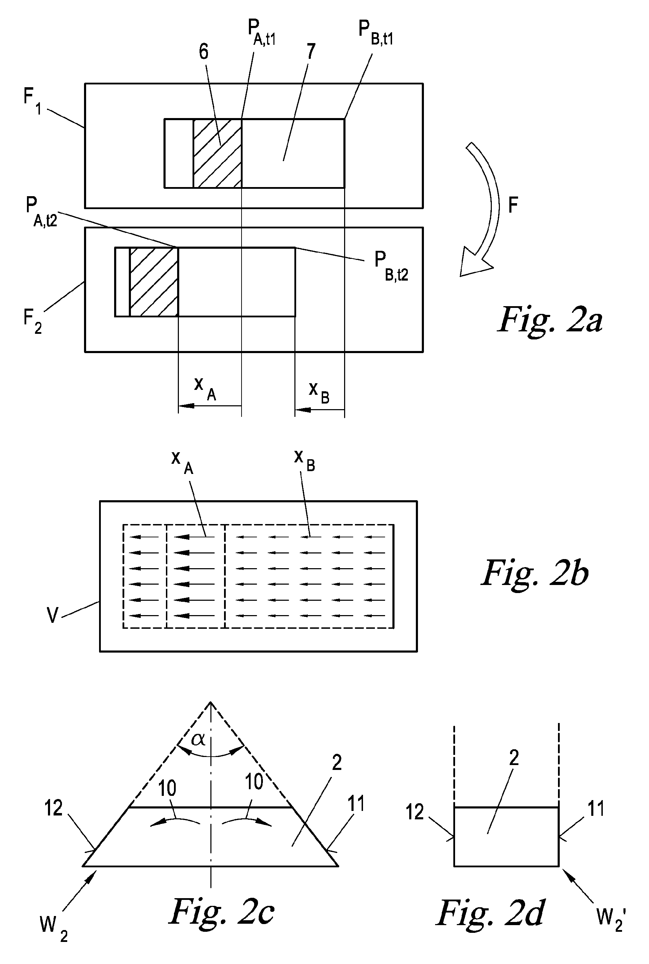

Fig. 2a zeigt die den Aufnahmesituationen der Fig. 1a und 1b entsprechenden Aufnahmebilder (frames) F₁, F₂ der Kamera 4 zu den beiden Zeitpunkten t₁, t₂. Die beiden Bilder F₁, F₂ werden einem optischen Flussanalyseverfahren (optical flow analysis) zugeführt. Das Verfahren der optischen Flussanalyse ist in der Technik bekannt und ermittelt beispielsweise aufgrund von signifikanten, in den Bildern F₁, F₂ detektierten Punkten ("feature points") Bewegungsvektoren x_{A}, x_{B} der signifikanten Punkte ("sparse approach"). Alternativ können alle Bildpunkte berücksichtigt werden, indem ihre gesuchten Bewegungsvektoren als Bestandteil einer zu minimierenden Zielfunktion betrachtet werden, d.h. es wird jene Bewegungsvektormatrix gesucht, die die Veränderung des optischen Flusses F zwischen den Bildern F₁ und F₂ am besten widerspiegelt ("dense approach"). Bevorzugte Implementierungen des "dense approach" sind das Total-Variation-Optical-Flow-Verfahren, bei welchem die Zielfunktion ein zu minimierender Energieterm ist, der Helligkeits- und Farbänderungen zwischen den Bildern berücksichtigt. Auch weitere Terme (höherer Ordnung) können berücksichtigt werden, um die Ergebnisse weiter zu verbessern. Für Details der optischen Flussanalyse und insbesondere des Total-Variation-Optical-Flow-Verfahrens wird auf die eingangs genannten Literaturstellen T. Brox und J. Malik, "Large Displacement Optical Flow: Descriptor Matching in Variational Motion Estimation", IEEE Transactions on Pattern Analysis and Machine Intelligence, Bd 33, Ausgabe 3, Seiten 500-513, 2011, verwiesen; unter URL:http://-lmb.informatik.uni-freiburg.de/resources/binaries/ ist beispielsweise eine Matlab-C-mex-Implementierung dieser Verfahren verfügbar.

Als Randbedingungen für die Total-Variation-Optical-Flow-Analyse können dabei spezielle "Smoothness"-Terme verwendet werden, welche die geringe bzw. fehlende Bewegung des Fahrzeugs 2 quer zur Straßenlängsrichtung 5 als Voraussetzung miteinbeziehen, um die Lösung der Minimierungsaufgabe zu erleichtern. Um eine gute Trennung zwischen unterschiedlichen Objekten (Straße, Fahrzeug) zu erreichen und nicht etwa die Kante zwischen Fahrzeug und Straße zu glätten, wird bevorzugt anisotrop (parallel zu den in den Bildern auftretenden Kanten) geglättet.

Da die Bewegungsvektoren x(P) für langsame Fahrzeuge sehr klein und für stillstehende Fahrzeuge Null sind, wird bevorzugt in diesen Situationen der zeitliche Abstand t₂ - t₁ zwischen den beiden analysierten Bildern F₁ und F₂ vergrößert. Es werden so z.B. nicht unbedingt unmittelbar aufeinanderfolgende Bilder aus dem Videostream der Kamera 4, wenn diese eine Videokamera ist, analysiert, sondern solche, die entsprechend zeitlich auseinanderliegen. Bevorzugt werden die Aufnahmezeitpunkte t₁ und t₂ der beiden Bilder F₁ und F₂ gerade so gewählt, dass sich das Fahrzeug 2 jeweils in einer vorgegebenen Position auf der Straße 1 befindet, wie später noch ausführlicher erläutert wird. Es versteht sich, dass die Kamera 4 auch mehr als zwei Bilder F₁, F₂ zu mehr als zwei Zeitpunkten t₁, t₂ aufnehmen kann und diese Bilder in die optische Flussanalyse einbezogen werden können.

Fig. 2b zeigt das Ergebnis der optischen Flussanalyse von Fig. 2a in Form eines Bewegungsvektorbilds V, das einen Bewegungsvektor x(P) für jeden Bildpunkt P des Kamerabildes F₁ oder F₂ enthält. Fig. 2b ist eine stark schematisierte Zeichnung mit wenigen sinnbildlich dargestellten Bewegungsvektoren; tatsächlich handelt es sich bei dem Bewegungsvektorbild V um eine Matrix bzw. ein Array, bei dem jede Zelle bzw. Pixel P einen Bewegungsvektor x(P) enthält.

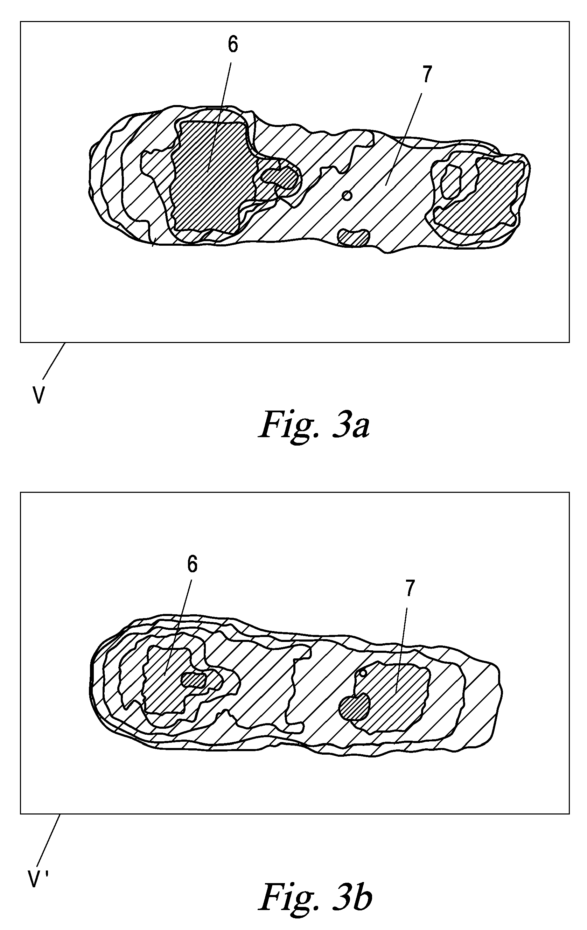

Fig. 3a zeigt eine andere Form der Darstellung des Bewegungsvektorbilds V von Fig. 2b, wobei die Absolutwerte ("Geschwindigkeiten") der Bewegungsvektoren x(P) in unterschiedliche Abstufungsbereiche klassifiziert (quantisiert) wurden; wie ersichtlich erscheint hier deutlich die Deckfläche 6 (Kabinendach) des Fahrzeugs 2 mit einer hohen (scheinbaren) Geschwindigkeit und die Deckfläche 7 (Pritsche) des Fahrzeugs 2 mit einer geringen (scheinbaren) Geschwindigkeit.

Aus dem Bewegungsvektorbild V (Fig. 2b, 3a) kann nun direkt die jeweilige Entfernung y (Fig. 1a, 1b) eines Punktes des Fahrzeugs 2 zur Kamera 4 ermittelt werden: Ein hoher Absolutwert des Bewegungsvektors x(P) zeigt eine geringe Entfernung y an und umgekehrt. Das Bewegungsvektorbild V stellt damit gleichzeitig ein - wenn auch "rohes", weil unskaliertes - Höhenrelief bzw. Höhenprofil des auf der Straße 1 passierenden Fahrzeugs 2 dar.

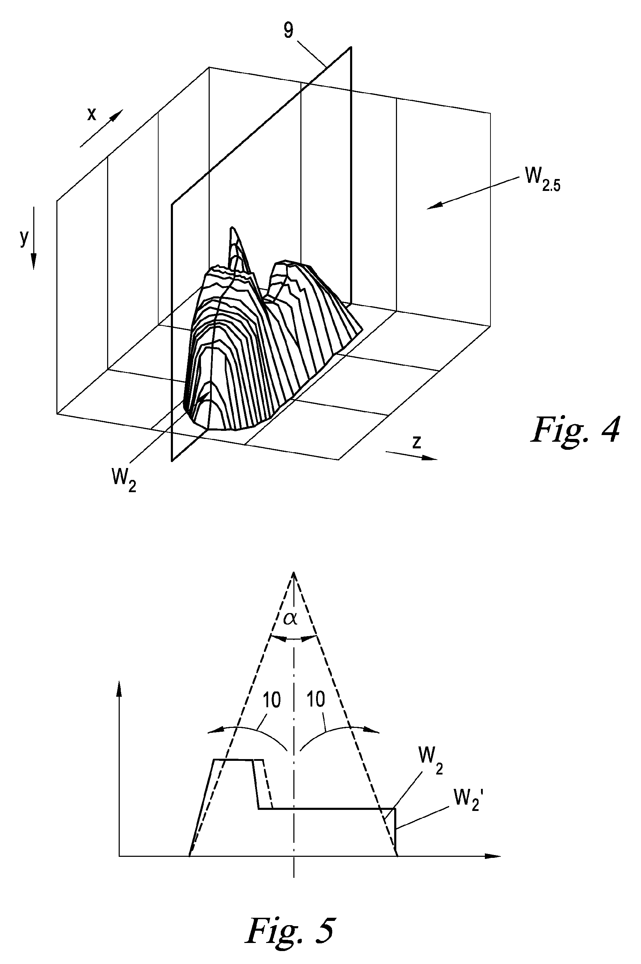

Fig. 4 zeigt dies veranschaulichend, indem den Absolutwerten der Bewegungsvektoren x(P) des Bewegungsvektorbilds V Entfernungen y zugeordnet und diese graphisch dargestellt wurden. Die Darstellung von Fig. 4 zeigt damit ein 3D-Höhenprofil, genauer: ein 2.5D-Höhenprofil W_{2.5}, des Fahrzeugs 2. Durch Erstellen eines Schnitts in einer Ebene 9 parallel zur Straßenlängsrichtung 5 kann aus dem 3D- bzw. 2.5D-Höhenprofil W_{2.5} von Fig. 4 ein 2D-Höhenprofil W₂ erzeugt werden, welches in Fig. 5 dargestellt ist.

Aus Fig. 5 ist ersichtlich, dass das bislang betrachtete Höhenprofil W_{2.5} bzw. W₂ entsprechend dem Öffnungswinkel α der Kamera 4 in Straßenlängsrichtung 5 (und auch entsprechend dem Öffnungswinkel β quer dazu) verzerrt ist. Mit Hilfe einer entsprechenden geometrischen Ausgleichsrechnung kann somit das 2D-Höhenprofil W₂ von Fig. 5 (bzw. das 2.5D-Höhenprofil W_{2.5}) von Fig. 4 um den Öffnungswinkel α (und optional auch β) der Kamera 4 kompensiert, d.h. entzerrt werden, wie durch die Pfeile 10 in Fig. 5 schematisch versinnbildlicht; das entzerrte 2D-Höhenprofil ist in Fig. 5 mit W₂' bezeichnet. Die Fig. 2c und 2d zeigen schematisch den Schritt des Entzerrens eines 2D-Höhenprofils W₂ um den Öffnungswinkel α in Straßenlängsrichtung 5 anhand eines kastenförmigen Fahrzeugs 2 mit vertikalen Stirnflächen 11, 12 im Detail.

Die Entzerrung um den Öffnungswinkel α (bzw. β) kann sowohl direkt an den Höhenprofilen W_{2.5}, W₂ durchgeführt werden, als auch schon zuvor an dem Bewegungsvektorbild V. Dies ist in Fig. 3b gezeigt, welche das Bewegungsvektorbild V von Fig. 3a nach dem Schritt des Entzerrens um die Öffnungswinkel α, β zeigt; das entzerrte Bewegungsvektorbild ist mit V' bezeichnet. Die Erstellung eines entzerrten 2.5D-Höhenprofils W_{2.5}' bzw. eines entzerrten 2D-Höhenprofils W₂' kann somit auch direkt aus dem entzerrten Bewegungsvektorbild V' von Fig. 3b erfolgen.

Die Höhenprofile W_{2.5}, W_{2.5}', W₂, W₂' können anschließend zur Klassifizierung des Fahrzeugs 2 verwendet werden, beispielsweise indem daraus signifikante Parameter des Fahrzeugs 2, wie Höhe und Länge, berechnet oder die Höhenprofile mit einem Satz vorgespeicherter Referenz-Höhenprofile bekannter Fahrzeugklassen verglichen werden.

Wenn die Eigengeschwindigkeit v des Fahrzeugs 2 bekannt ist, beispielsweise durch Vermessung mittels gesonderter Sensoren wie Lichtschranken, Induktionsschleifen in der Fahrbahn 1, Scanner usw., kann sie direkt in die optische Flussanalyse von Fig. 2a einbezogen werden und die Bewegungsvektorbilder V, V' und Höhenprofile W_{2.5}, W_{2.5}', W₂, W₂' enthalten absolute Werte, d.h. sind skaliert, so dass aus ihnen z.B. die korrekte Höhe und Länge des Fahrzeugs 2 entnommen werden können. Wenn die Eigengeschwindigkeit v des Fahrzeugs 2 nicht bekannt ist oder gesondert gemessen wird, insbesondere wenn nur eine einzige Kamera 4 für die Ausführung des beschriebenen Optical-Flow-Verfahrens vorgesehen wird, kann ein tiefster, d.h. kamerafernster sich bewegender Punkt P₃ - oder ein Schatten des Fahrzeugs 2 auf der Straße 1 - in den Bildern F₁, F₂ als Referenzwert herangezogen und das Bewegungsvektorbild V, V' bzw. die Höhenprofile W_{2.5}, W_{2.5}', W₂, W₂' können referenziert und so skaliert werden. Es könnte auch ein Schatten des Fahrzeugs 2 auf der Straße 1, z.B. ein äußerster Punkt dieses Schattens, in den Bildern F₁ und F₂ detektiert und zur Geschwindigkeitsmessung verwendet werden, um die Höhenprofile W_{2.5}, W_{2.5}', W₂, W₂' danach zu skalieren.

Alternativ können vorausschauend die Aufnahmezeitpunkte t₁, t₂ der beiden analysierten Bilder F₁, F₂ so gewählt werden, dass sie vorbestimmten Positionen des Fahrzeugs 2 auf der Straße 1 entsprechen. So können beispielsweise mit Hilfe von in die Fahrbahn integrierten Raddetektoren D₁, D₂, z.B. Induktionsschleifen, Lichtschranken, Scanner usw., aber auch durch eine Auswertung der fortlaufenden Bilder (des Videostreams) der Kamera 4 selbst, jene beiden Zeitpunkte t₁, t₂ detektiert werden, zu denen das Fahrzeug 2 die beiden in Fig. 1a mit ausgezogenen und strichlierten Linien gezeigten Stellungen bzw. Positionen einnimmt, um dann jeweils eine der Bildaufnahmen F₁, F₂ aufzunehmen. Dadurch werden die Höhenprofile W_{2.5}, W_{2.5}', W₂, W₂' automatisch geschwindigkeitsrichtig skaliert.

Selbstverständlich kann mit dem Verfahren der Erfindung auch von mehreren Fahrzeugen im Sichtbereich der Kamera 4 jeweils ein Höhenprofil W_{2.5}, W_{2.5}', W₂, W₂' erstellt werden. Die Erfindung ist demgemäß nicht auf die dargestellten Ausführungsformen beschränkt, sondern umfasst alle Varianten und Modifikationen, die in den Rahmen der angeschlossenen Ansprüche fallen.

## Patentansprüche

1. Verfahren zum Messen eines Höhenprofils (W_{2.5}, W_{2.5}', W₂, W₂') eines auf einer Straße (1) passierenden Fahrzeugs (2), umfassend:
Richten einer monokularen Kamera (4) von einem Punkt oberhalb der Straße (1) auf die Straße (1) mit einem Öffnungswinkel (α, β), der einen Ausschnitt der Straße (1) von oben erfasst,
Aufnehmen zumindest eines ersten Bildes (F₁) des passierenden Fahrzeugs (2) mittels der Kamera (4) zu einem ersten Zeitpunkt (t₁),
Aufnehmen zumindest eines zweiten Bildes (F₂) des passierenden Fahrzeugs (2) mittels der Kamera (4) zu einem zweiten Zeitpunkt (t₂),
Erzeugen eines Bewegungsvektorbildes (V, V') des Fahrzeugs (2) aus einer Analyse des optischen Flusses (F) zwischen dem ersten und dem zweiten Bild (F₁, F₂), und
Erstellen des Höhenprofils (W_{2.5}, W_{2.5}', W₂, W₂') des Fahrzeugs (2) aus dem Bewegungsvektorbild (V, V').

2. Verfahren nach Anspruch 1, **dadurch gekennzeichnet, dass** die Kamera (4) im wesentlichen vertikal nach unten auf die Straße (2) gerichtet wird.

3. Verfahren nach Anspruch 1 oder 2, **dadurch gekennzeichnet, dass** das Höhenprofil (W_{2.5}, W_{2.5}') ein 2.5D-Höhenprofil ist.

4. Verfahren nach Anspruch 1 oder 2, **dadurch gekennzeichnet, dass** das Höhenprofil (W₂, W₂') ein 2D-Höhenprofil ist, das parallel zur Straßenlängsrichtung (5) verläuft.

5. Verfahren nach einem der Ansprüche 1 bis 4, **dadurch gekennzeichnet, dass** das Höhenprofil (W_{2.5}, W_{2.5}', W₂, W₂') anhand der Geschwindigkeit (v) des tiefsten aufgenommenen Punktes (P₃) des Fahrzeugs (2) oder eines Schattens des Fahrzeugs (2) auf der Straße (1) skaliert wird.

6. Verfahren nach einem der Ansprüche 1 bis 4, **dadurch gekennzeichnet, dass** der erste Zeitpunkt (t₁) jener Zeitpunkt ist, zu dem das Fahrzeug (2) in einer ersten Position auf der Straße (1) detektiert wird, und der zweite Zeitpunkt (t₂) jener Zeitpunkt ist, zu dem das Fahrzeug in einer zweiten Position auf der Straße (1) detektiert wird.

7. Verfahren nach Anspruch 6, **dadurch gekennzeichnet, dass** das Detektieren des Fahrzeugs (2) in der ersten und der zweiten Position mit Hilfe von an der Straße (1) angeordneten Sensoren oder mittels einer Auswertung der Bilder (F₁, F₂) der Kamera (4) selbst durchgeführt wird.

8. Verfahren nach einem der Ansprüche 1 bis 7, **gekennzeichnet durch** den weiteren Schritt des Entzerrens (10) des Bewegungsvektorbildes (V) zur Kompensation des Öffnungswinkels (α, β), bevor daraus das Höhenprofil (W_{2.5}', W₂') erstellt wird.

9. Verfahren nach einem der Ansprüche 1 bis 7, **gekennzeichnet durch** den weiteren Schritt des Entzerrens (10) des Höhenprofils (W_{2.5}, W₂) zur Kompensation des Öffnungswinkels (α, β).

10. Verfahren nach einem der Ansprüche 1 bis 9, **dadurch gekennzeichnet, dass** für die Analyse des optischen Flusses (F) ein Total-Variation-Optical-Flow-Verfahren verwendet wird.

11. Verfahren nach einem der Ansprüche 1 bis 10, **gekennzeichnet durch** den weiteren Schritt des Klassifizierens des Fahrzeugs (2) anhand eines Vergleichs des erstellten Höhenprofils (W_{2.5}, W_{2.5}', W₂, W₂') mit Referenz-Höhenprofilen bekannter Fahrzeugklassen.

12. Verfahren nach einem der Ansprüche 1 bis 11, **dadurch gekennzeichnet, dass** als Kamera (4) eine oberhalb der Straße (1) montierte Verkehrsüberwachungskamera verwendet wird.

## Claims

1. A method for measuring a height profile (W_{2.5}, W_{2.5}', W₂, W₂') of a vehicle (2) passing on a road (1), said method comprising the following steps:
directing a monocular camera (4) from a point above the road (1) onto the road (1) with an angle of aperture (α, β) that captures a section of the road (1) from above,
recording at least a first image (F₁) of the passing vehicle (2) by means of the camera (4) at a first moment in time (t₁),
recording at least a second image (F₂) of the passing vehicle (2) by means of the camera (4) at a second moment in time (t₂),
generating a movement vector image (V, V') of the vehicle (2) from an analysis of the optical flow (F) between the first and the second image (F₁, F₂), and
creating the height profile (W_{2.5}, W_{2.5}', W₂, W₂') of the vehicle (2) from the movement vector image (V, V').

2. The method according to Claim 1, **characterised in that** the camera (4) is directed substantially vertically downwardly onto the road (1).

3. The method according to Claim 1 or 2, **characterised in that** the height profile (W_{2.5}, W_{2.5}') is a 2.5D height profile.

4. The method according to Claim 1 or 2, **characterised in that** the height profile (W₂, W₂') is a 2D height profile, which runs parallel to the longitudinal direction of the road (5).

5. The method according to one of Claims 1 to 4, **characterised in that** the height profile (W_{2.5}, W_{2.5}', W₂, W₂') is scaled on the basis of the speed (v) of the lowest recorded point (P₃) of the vehicle (2) or on the basis of a shadow of the vehicle (2) on the road (1).

6. The method according to one of Claims 1 to 4, **characterised in that** the first moment in time (t₁) is the moment in time at which the vehicle (2) is detected in a first position on the road (1), and the second moment in time (t₂) is the moment in time at which the vehicle is detected in a second position on the road (1).

7. The method according to Claim 6, **characterised in that** the vehicle (2) is detected in the first and second positions with the aid of sensors arranged at the road (1) or by means of an evaluation of the images (F₁, F₂) of the camera (4) itself.

8. The method according to one of Claims 1 to 7, **characterised by** the further step of rectifying (10) the movement vector image (V) for compensation of the angle of aperture (α, β), before the height profile (W_{2.5}', W₂') is created therefrom.

9. The method according to one of Claims 1 to 7, **characterised by** the further step of rectifying (10) the height profile (W_{2.5}, W₂) for compensation of the angle of aperture (α, β).

10. The method according to one of Claims 1 to 9, **characterised in that** a total variation optical flow method is used for the analysis of the optical flow (F).

11. The method according to one of Claims 1 to 10, **characterised by** the further step of classifying the vehicle (2) on the basis of a comparison of the created height profile (W_{2.5}, W_{2.5}', W₂, W₂') with reference height profiles of known vehicle classes.

12. The method according to one of Claims 1 to 11, **characterised in that** a traffic monitoring camera mounted above the road (1) is used as the camera (4).

## Revendications

1. Procédé de mesure d'un profil de hauteur (W_{2.5}, W_{2.5'}, W₂, W_{2'}) d'un véhicule (2) passant sur une route (1), comprenant :
l'orientation d'une caméra monoculaire (4) à partir d'un point au dessus de la route (1) sur la route (1) avec un angle d'ouverture (α, β) qui saisit une portion de la route (1) à partir du dessus,
la prise d'au moins une première image (F₁) du véhicule (2) passant au moyen de la caméra (4) à un premier instant (t₁),
la prise d'au moins une deuxième image (F₂) du véhicule (2) passant au moyen de la caméra (4) à un deuxième instant (t₂),
la génération d'une image vectorielle de déplacement (V, V') du véhicule (2) à partir de l'analyse du flux optique (F) entre les première et deuxième images (F1, F2), et
l'établissement du profil de hauteur (W_{2.5}, W_{2.5'}, W₂, W_{2'}) du véhicule (2) à partir de l'image vectorielle de déplacement (V, V').

2. Procédé selon la revendication 1, **caractérisé en ce que** la caméra (4) est orientée essentiellement verticalement vers le bas sur la route (1).

3. Procédé selon la revendication 1 ou 2, **caractérisé en ce que** le profil de hauteur (W_{2.5}, W_{2.5'}) est un profil de hauteur en 2.5D.

4. Procédé selon la revendication 1 ou 2, **caractérisé en ce que** le profil de hauteur (W₂, W_{2'}) est un profil de hauteur 2D qui s'étend parallèlement par rapport au sens longitudinal (5) de la route.

5. Procédé selon l'une des revendications 1 à 4, **caractérisé en ce que** le profil de hauteur (W_{2.5}, W_{2.5'}, W₂, W_{2'}) est redimensionné à l'aide de la vitesse (v) du point le plus bas (P₃) enregistré du véhicule (2) ou d'une ombre du véhicule (2) sur la route (1).

6. Procédé selon l'une des revendications 1 à 4, **caractérisé en ce que** le premier instant (t₁) est l'instant auquel le véhicule (2) est détecté dans une première position sur la route (1), et le deuxième instant (t₂) est l'instant auquel le véhicule est détecté dans une deuxième position sur la route (1).

7. Procédé selon la revendication 6, **caractérisé en ce que** la détection du véhicule (2) dans les première et deuxième positions est effectuée à l'aide de capteurs disposés sur la route (1) ou au moyen d'une exploitation des images (F1, F2) de la caméra (4) elle-même.

8. Procédé selon l'une des revendications 1 à 7, **caractérisé par** une autre étape d'égalisation (10) de l'image vectorielle de déplacement (V) pour la compensation de l'angle d'ouverture (α, β) avant que le profil de hauteur (W_{2.5'}, W₂) ne soit établi à partir de celle-ci.

9. Procédé selon l'une des revendications 1 à 7, **caractérisé par** une autre étape d'égalisation (10) du profil de hauteur (W_{2.5}, W₂) pour la compensation de l'angle d'ouverture (α, β).

10. Procédé selon l'une des revendications 1 à 9, **caractérisé en ce qu'**un procédé de variation totale de flux optique est utilisé pour l'analyse du flux optique (F).

11. Procédé selon l'une des revendications 1 à 10, **caractérisé par** une autre étape de classification du véhicule (2) à l'aide d'une comparaison du profil de hauteur (W_{2,5}, W_{2,5'}, W₂, W_{2'}) établi avec des profils de hauteur de référence des classes de véhicules connues.

12. Procédé selon l'une des revendications 1 à 11, **caractérisé en ce qu'**une caméra de surveillance du trafic montée au dessus de la route (1) est utilisée en tant que caméra (4).
